# EUROPEAN PATENT APPLICATION

(11) **EP 1 538 027 A2**
(43) Date of publication of application: **08.06.2005**
(21) Application number: 04077841.7
(22) Date of filing: 15.10.2004
(51) Int. Cl.: B60R 9/10, B60R 9/06

(54) **Load carrier**

(30) Priority: 16.10.2003 NL 1024559
(71) Applicant: SPINDER PRODUCTS B.V., 9206 AG Drachten (NL)
(72) Inventor: Jorritsma, Wibren, 8724 LH It Heidenskip (NL)
(74) Representative: Klooster, Jan Hanri

(57) **Abstract**

Load carrier with coupling device for coupling onto a towing hook of a vehicle comprising the following constructional parts: a coupling house connectable to the load carrier and the towing hook; a two ball clamp members pivotable mounted between side portions and a lever system. By tilting downward and upward the coupling house is easily coupled whereby both ball clamp members are clampingly engaging the ball of the towing hook on both sides.

Moreover the load carrier may comprise an easily adjustable load holder, like a cycle wheel holder comprising locking pins which may be snapped into snap-in elements provided in a support tube of the load carrier.

Furthermore the load carrier may comprise a load clamp like a cycle frame clamp consisting of two plier-shaped clamp arms and preferably a ratchet element cooperating with an arc-shaped toothing element for easily clamping and releasing a cycle frame tube.

## Description

The invention related to a load carrier, e.g. for a cycle rack, provided with a coupling device for releasably coupling onto a towing hook with neck and ball of a vehicle.

Many different load carriers with coupling devices are know for coupling of a load carrier, like a cycle rack onto the tow hook of a vehicle. In European patent application no. EP 0666197 a load carrier for cycles is described with a coupling device comprising a sliding element and a screw element For coupling this load carrier with the tow hook, after positioning the cycle carrier onto the tow hook, at first the sliding element must be displaced over the neck of the tow. In order to obtain a solid stable connection between the coupling device and the ball secondly a screw element must be tightened for obtaining a strong clamping of the ball. This and other know load carriers have the disadvantage that coupling of the load carrier onto the tow hook is complicated, difficult and hard requiring a lot of different actions from a person. With the know load carriers usually clamp means must be tightened to obtain a strong, stable and traffic safe connection between the load carrier and the tow hook. During tightening of the screw member the load carrier must be supported by the person performing the coupling.

Object of the invention is to provide a coupling device which may be coupled reliable and easily onto the tow hook of a vehicle, without having the necessity to additionally sliding or tightening means and whereby the coupling process is performed by one easy movement of the load carrier. Moreover the coupling device must be easily and economically producible and be assembled from a small number of easily producible construction parts..

This objective is achieved with a coupling device of the load carrier comprising the following construction parts:
a. a coupling housing on the one hand connectable to the load carrier and on the other hand connectable to the towing hook, the coupling housing comprising two parallel, preferably sheet-shaped side portions or side walls mutually distantly spaced interconnected, which side portions are provided with a guide slit for guiding a divided ball clamp,
b. a first ball clamp member pivotably connected in the coupling housing between the side portions, and provided with a therewith fixedly connected first lever of a lever assembly;
c. a second ball clamp member pivotably and guidable arranged in the coupling housing between the side portions by means of on both sides arranged guide means that are guided in the guide slits and whereby the second ball clamp member is provided with a fixedly connected second lever of said lever assembly,
d. a lever assembly comprising at least the two aforesaid levers, which are pivotably interconnected,
such that the coupling housing is coupled with the towing hook by successively tilting the coupling housing over the ball and therefore moving the guide means of the second ball clamp member through the guide slit from a first still opened position of the coupling device, into the second final end position of the coupling device, whereby both ball clamp members are clampingly engaging the ball of the towing hook on both sides.

In another embodiment the second ball clamp member comprises a stamp which is displaceble in a holder against a spring force.

In yet another embodiment the load carrier is tiltable such that by tilting the coupling housing the coupling device reaches a third tilting position, whereby the ball clamp members are clampingly engaging the ball of the towing hook on both sides thus making a temporary downward position of the load carrier possible, in particular for opening the backdoor of the vehicle free of the load carrier.
In this embodiment of the load carrier it is not necessary to remove the load carrier from the tow hook, when the backdoor must be opened.

In a preferred embodiment the guide slits in the side portions of the coupling housing are configured from at least two different mutually converting curve portions, whereby a first curve portion is configured to move the second ball clamp member between the first (open) and the second (locked) position of the coupling device and that the consecutive second curve portion is such configured to move the coupling device and the load carrier from the second (locked) position into the temporary third position.
The coupling device is as a result easily and economically producible and may be assembled from a small number construction parts.

In a practical embodiment the first curve portion is configured such that starting from the first position of the coupling device firstly the second ball clamp member is displaced to the ball over a great distance per tilting angle of the coupling housing, while near the second position of the coupling device the second ball clamp member is moved to the ball over a small distance per tilting angle of the coupling housing.
This embodiment is a easily maintainable coupling device whereby with little muscle power a high clamping force may be generated.

In another embodiment the second curve portion is a circle segment with a constant radius (R) with respect to the pivoting point positioned in the centre of the circle.
This embodiment comprises an easily downwards tiltable load carrier, whereby the clamping engagement of the tow hook is not released.

In yet another embodiment the first lever is configured as two substantially parallelly extending straight rods with their first outer ends being fixedly connected to both sides of the first ball clamp member and with the other outer ends being provided with a short straight portion angular turned over, whereby both straight rods on their second outer end are mutually interconnected by means of an abutting member at the point of intersection of the short turned over portion and the long portion.
The ball clamp member configured with rods is easily openable and hingeable without requiring muscle power because of absence of a dead point.

In a preferred embodiment the coupling device is provided with a locking member engaging the second ball clamp member and locking the coupling device into the second closed position.
This embodiment guarantees a stable and safe coupling between the load carrier and the tow hook, which is only manually releasable by means of an action by a person.

In a preferred embodiment the locking member consists of a long pin, which is conducted through the transverse connection element and exerts spring force in the direction of the second ball clamp member by means of a mounted spring element
The load carrier in this embodiment comprises a safe en reliable locking and releasing mechanism.

In another embodiment the load carrier comprises a horizontal support tube longitudinally provided with a small slot of limited length provided with snap elements and whereby the load carrier is further provided with an adjustable load holder, like a cycle wheel holder, pivotable and displaceable over a limited distance over the circumference surface of the support tube, whereby the load holder consists of a load receiver, like a wheel channel, and of a tubular element that freely displaceably encloses the circumference of the support tube at the location of the slot, whereby the load receiver is herein connected with the tubular element by means of the locking pins, which are extending in such a way through the wall of the tubular element into the support tube that the locking pins may be snapped in or out of one or more of the snapping elements arranged in the slot by means of rotation -or in other words by tilting forwards and backwards- of the load holder over the tube circumference of the support tube for locking or releasing respectively.
In this embodiment the load carrier is easily adjustable, whereby the load receivers remain fixedly and safely connected with the support frame.

In a preferred embodiment a number of snap elements consists of recesses arranged in the wall of the support tube at mutual distant spaces in the circumferential edge of the slot.
This embodiment comprises a easily an economically constructible adjustment device.

In another preferred embodiment the snap elements are releasably located in a separate snap member which may be mounted into the slot of the support tube. In this embodiment the snap member may be separately produced and optional be constructed from another material.
In yet another preferred embodiment the snap member also is provided with receiving elements wherein the locking pins do not experience snap-in forces during pivoting and displacing of the load holder.
In another practical embodiment the snap elements (54) and receiving elements (57) alternate within the snap member (35).
This embodiment with only one locking pin prevents problems as result of variations in size and dimensions in the snap elements often leading to high snap in/out forces.

In another embodiment load carrier, is provided with a fast lockable and releasable load clamp which is positioned on a support element, for clamping a cycle frame tube, the load clamp comprising:
a. a first plier-shaped clamp arm which is fixedly connected onto a support member comprising a clamp claw and
b. a second clamp arm with hand tensioning grip mounted hingingly and movably onto an axis comprising a clamp claw,
c. a recess in the hand tensioning grip as a result of which a on the first clamp arm (60) positioned arc-shaped toothing element is being engagable;
d. a hinging ratchet element in the second hand tensioning grip provided with toothing, which engages and cooperates with the arc-shaped toothing of the first camp arm,
such that by hand pressing of the load clamp the ratchet element rattles with his teeth over the arc-shaped toothing to reach the clamping position of the load clamp so that the cycle frame tube is fixedly clamped between the clamp claws on both clamp arms and such that by pressing the hinging ratchet element the connection with the arc-shaped toothing is released and the load clamp is released from its clamping position into its opened position, so that the cycle frame tube unlocks from the load clamp.
In this embodiment of the load carrier a cycle may be connected or released easily and fast so that loading and unloading of the load like a cycle is fast and user friendly.

In a preferred embodiment the arc-shaped toothing element is configured in the first clamp arm as a releasable element whereby the element further comprises: a tensioning grip element, an opening for hingingly attaching onto the clamp pivot axis, an abutting surface, and an arc-shaped surface with toothing, such that in clamping position the arc-shaped toothing transmits the clamping force.
In this embodiment the load clamp comprises of a separately producible element so that the element may be optionally constructed from hard wearing material e.g. like a metal.
Fig. 1A shows a total view of the load carrier according to the invention.,
Fig. 1B shows a perspective view of the central support frame with coupling device,
Fig. 1C shows a perspective bottom view of the central support frame with coupling device,
Fig. 2A is a perspective view of the coupling device according to invention for mounting on a toe hook,
Fig. 2B is a perspective view of the coupling device according to invention after mounting on the tow hook,
Fig. 2C is a perspective view of the coupling device according to invention in closed position,
Fig. 2D is perspective view of the coupling device according to invention in tilting down position,
Fig. 3 is an exploded perspective view of the second ball clamp member,
Fig. 4A is a perspective frontal view of the spring bush holder,
Fig. 4B is a perspective rear view of the spring bush holder,
Fig. 5A is a perspective frontal view of the first ball clamp member,
Fig. 5B is a rear perspective view the first ball clamp member,
Fig. 6 is a perspective side view of a side portion of the coupling housing,
Fig. 7 is an exploded perspective view of the load holder,
Fig. 8 is a perspective view of a snap member,
Fig. 9 is a perspective view of a load clamp,
Fig. 10 is an exploded perspective view of a load clamp with releasable element.

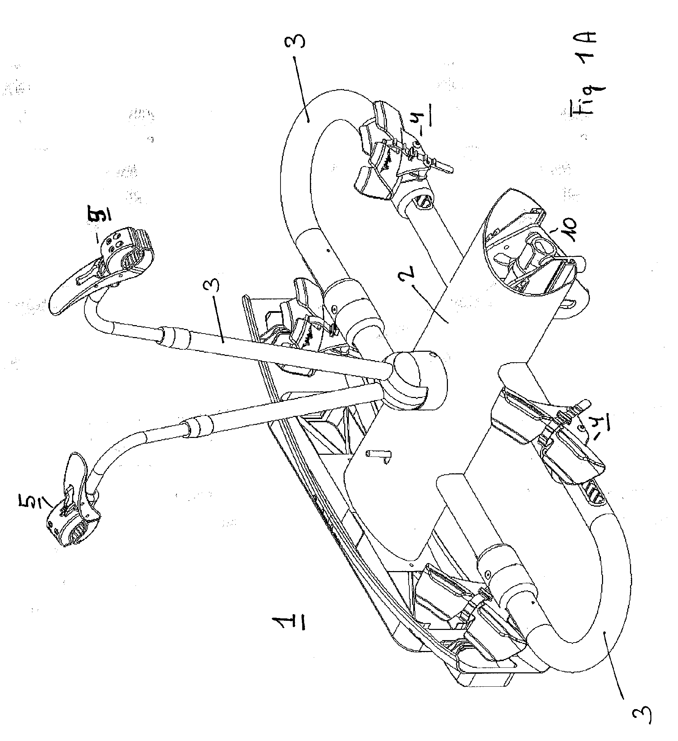

Fig.1A shows a total view of the load carrier according to the invention. In this embodiment the load carrier consists of a cycle carrier 1 provided with a central support frame 2, support tubes 3, load holders like cycle wheel holders 4, load clamps like cycle frame clamps 5 and a coupling device 10 for coupling the load carrier on a towing hook.

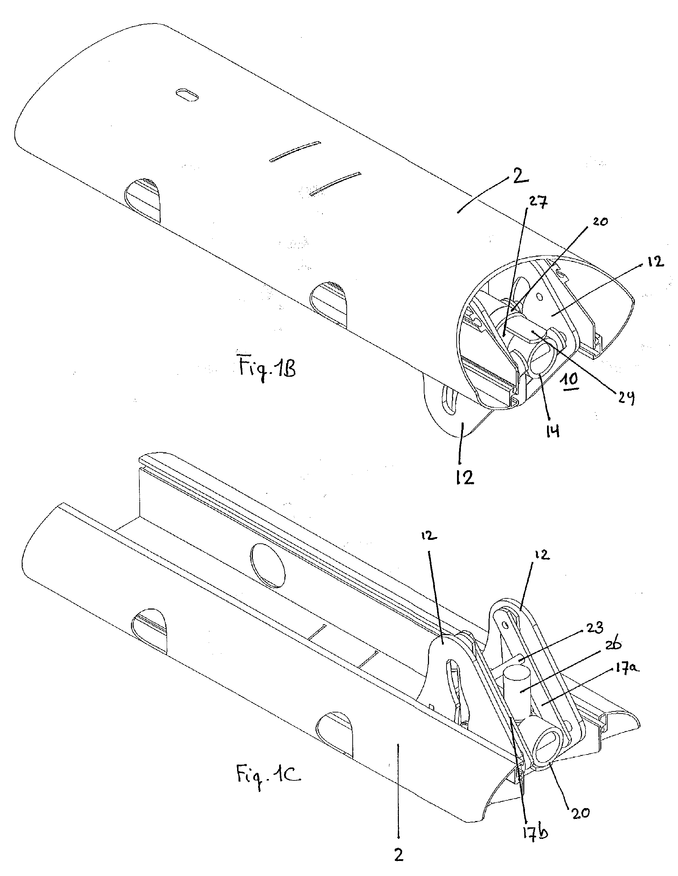

In Fig.1B is shown in details in top view support frame 2 with coupling device 10 in closed position. A part of the top side of the ball 27 of the tow hook is just visible between the first ball clamp member14 en the second ball clamp member 20. On top of the ball clamp member 14 is mounted stop sheet 24 which rests on top of ball 27. The central support frame 2 is fixedly attached to the side portions 12 such that by tilting the load carrier 1 with respect to the tow hook 25 and the central support frame 2 the side portions 12 will be tilted also. In Fig.1C is shown in detail a bottom view of the central support frame with the coupling device 11 in closed position . Further the coupling housing 11, is shown comprising the side portions 12, is fixedly clamped onto the tow hook 25, whereof neck 26 is visible. Second ball clamp member 20 engages the not visible ball 27. Further is shown both side portions 12 and lever 17 consisting in this embodiment of rods 17a and 17b. Also abutting member 23 is shown engaging the neck 26 of the tow hook .

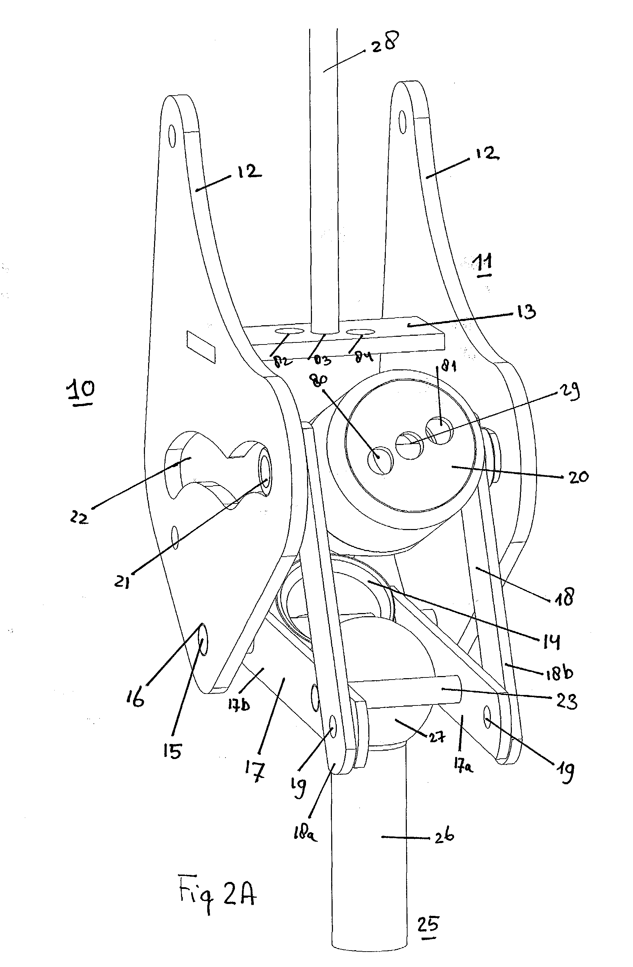

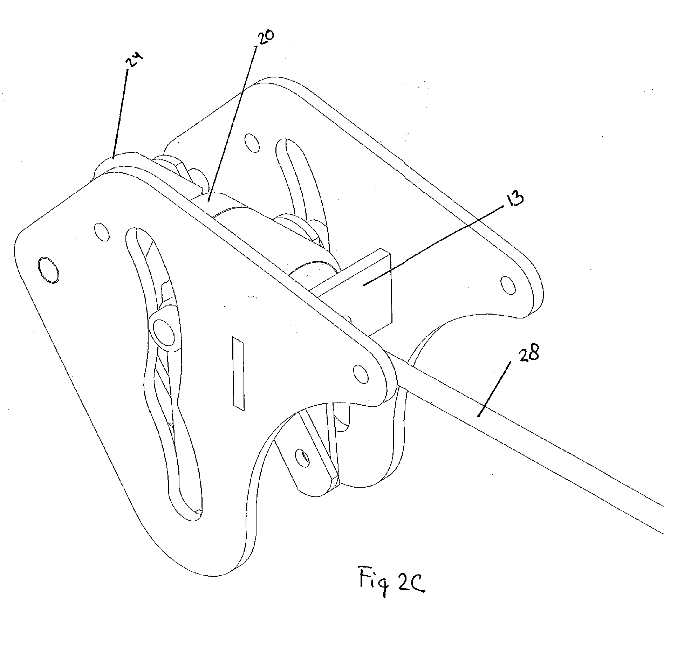

In Fig.2A en 2B is perspectively shown in detail the coupling device 10 of the load carrier. The coupling housing 11 comprises in this embodiment two identical side portions 12, mutually distantly spaced interconnected by means of transverse connection element 13. The first ball clamp member 14 is pivotable connected in the coupling housing 11 between the side portions 12. In this embodiment a pivot shaft 15 is mounted, fixedly connected to the first ball clamp member 14 by means of a weld connection, such that on both sides of the ball clamp member the exteriorly extending outer ends of the hinge shaft 15 are pivotable mounted into the circular openings 16 in the side portions. The ball clamp member 14 is fixedly connected with a lever assembly; in this embodiment configured by a first lever 17 and a second lever 18, who are pivotably connected with pivot point 19. In this embodiment first and second lever are consisting of two substantially parallelly extending straight rods 17a , 17b and 18a ,18b respectively. Between both lever rods 17a en 17b is mounted abutting member 23. The second ball clamp member 20 is fixedly connected with second lever 18, which is configured by both straight rods 18a and 18b, fixedly connected to both sides of the second ball clamp member 20 e.g. by means of a weld connection. Guide means are mounted on both sides of the second ball clamp member, in this embodiment as guide pins conducted through the outer ends of the rods 18a and 18b. The guide pins 21 of the second ball clamp member 20 are pivotable and hingeable arranged in the side portions 12 of the second ball clamp member 22.
In Fig.2A is further shown tow hook 25 with neck 26 en ball 27 and also how to position the coupling device for coupling onto the tow hook. The coupling housing is positioned over the top end of the ball 26 of the tow hook 25 in tilting position, by conducting through ball 27 between firstly rods 17 a en 17 b and secondly between abutting member 23 and first ball clamp member 14 so that the ball 27 is engaging first ball clamp member 14. Abutting member 23 of the lever assembly is engaging neck 26 of tow hook 25.
Furthermore Fig.2A shows a correction device for correcting the position of the tow hook. When the tow hook is out of the perpendicular with respect to the vertical axis a correction may be performed by adjusting the horizontal position of the load carrier by means of locking pin 28. By changing the position of the locking pin 28 from opening 83 of transverse connection element 13, to the lower positioned opening 84 or to the higher positioned opening 82 respectively the entire load carrier will be oriented with a small angle upwards or downwards respectively with respect to the horizontal axis. As a result locking pin 28 will be received by the higher positioned locking opening 81 or the lower locking opening 81 respectively instead of normal opening 29.

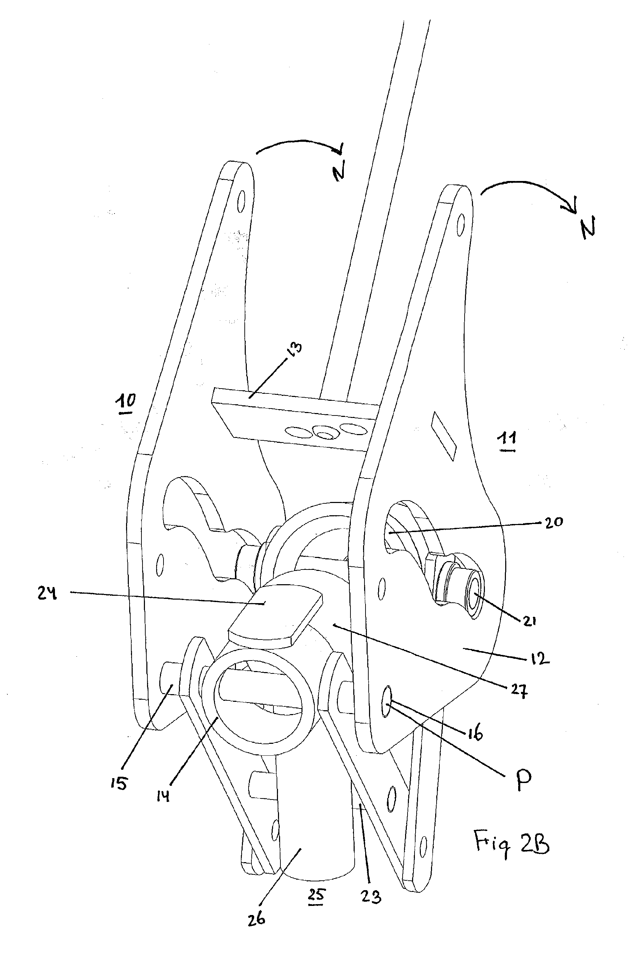

In Fig.2B is shown the stable status of an opened, not coupled, load carrier which rests on ball 27 and neck 26 of tow hook with first ball clamp member 14 with the thereupon attached stop sheet 24 and abutting member 23. The coupling device is now in the so-called first opened position, whereby the guide pins 21 are positioned in the bottom part 22' of guide slits 22. By tilting downwards load carrier 1 and thereof coupling device 10 and coupling housing 11 in the direction of arrows N over pivot point P, configured by hinge shaft 15, the second ball clamp member 20 is forced to displace upwards through the guide slits 22 by second lever 18 . Because of the special shape of the guide slits having different curve portions is guaranteed that the second ball clamp member 20 will engage opposite of the first ball clamp member 14 onto the ball 27 of tow hook 25. A consecutive curve portion of the guide slit 22 is specially configured to generate the clamp force between the ball clamp members.
In Fig.2C is shown the coupled, closed position of the coupling device with both ball clamp members 14, 20 clampingly engaging ball 25 of the tow hook.
In Fig.2C is further shown that coupling device 11 is locked into its closed position by means of a locking member. In this embodiment the locking member consists of a long locking pin 28, that engages in the locking opening 29 positioned in the bottom portion of spring bush holder 30. As show in Fig. 2C locking pin 29 is conducted trough transverse connection element 13 and by means of a spring element (not shown) the locking pin 28 exerts a spring force in the direction of the second ball clamp member 20. In order to unlock the coupling device 10, the locking pin 28 must be displaced and removed out of the locking opening 29 against the spring force, making tilting again possible of the coupling housing 11, e.g. for decoupling the load carrier.

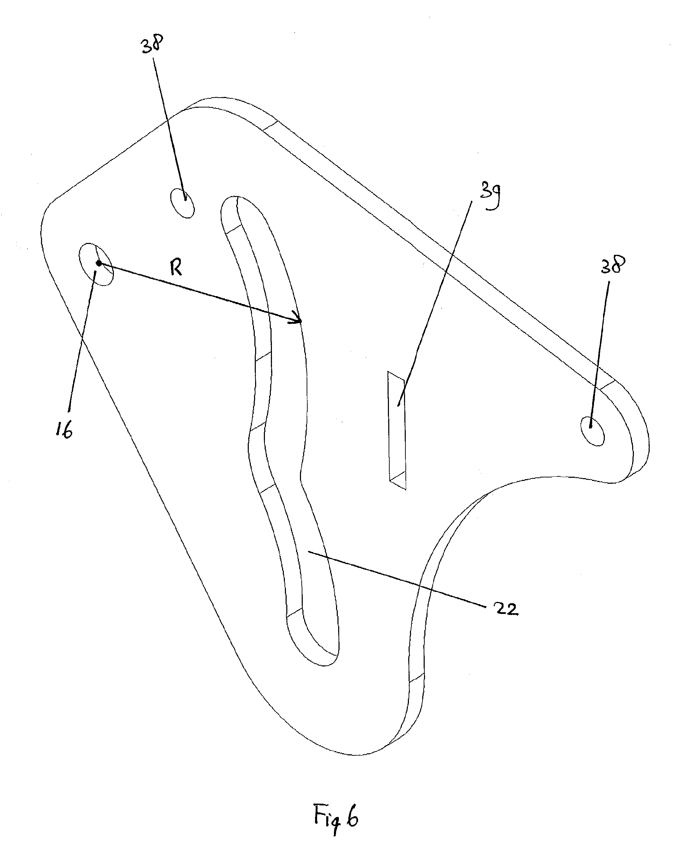

In Fig.2D is shown the third, tilted trough position of the coupling device 10 of the load carrier. In this position the load carrier is temporarily tilted downwards while the state of coupling and clampingly engaging the tow hook is maintained by the coupling device. This position is advantageous, while so easily the backdoor of a vehicle may be opened free of the load carrier. It is therefore not necessary to remove the load carrier from the tow hook in order to open the backdoor. In order to be able to tilt downwards the load carrier a curve portion 22" is configured in de guide slits 22, the portion being a circle segment with a constant radius R with respect to the pivoting point positioned in the centre of the circle. (see also Fig.6) First coupling device must be unlocked by removing the locking pin 28 out of the locking opening 29.Then the coupling housing 11 and the therewith connected load carrier may be tilted through, so that the guide pins 21 will be displaced upwards in the guide slits 22 until the third, temporarily position of the coupling device is reached, when the guides 21 are engaging the top side of the guide slits 22.

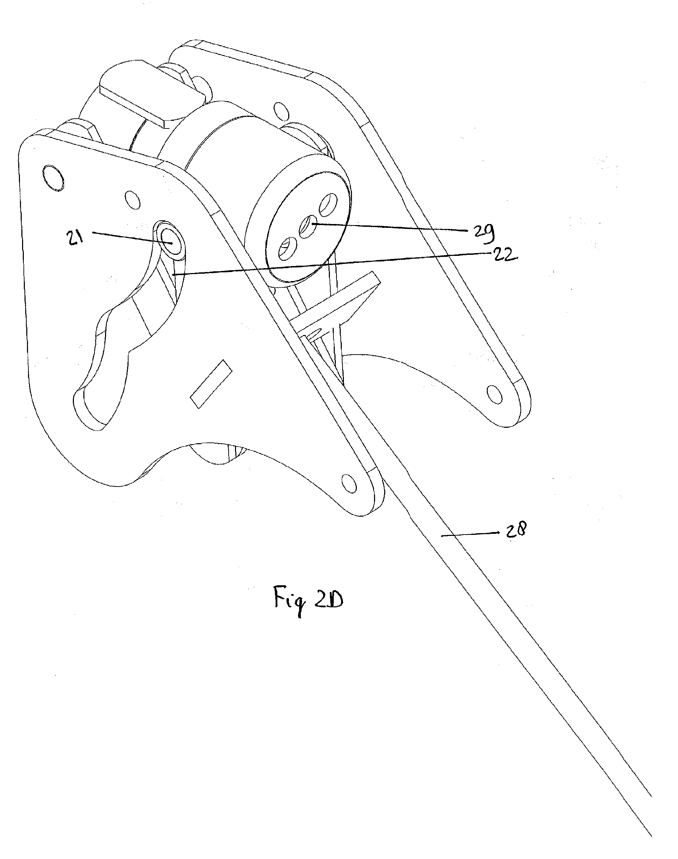

In Fig.3 is shown that in this embodiment the, second ball clamp member comprises 20 a spring bush holder 30, cupped spring washers 31 and stamp 32. The cupped spring washers 31 are enclosed in the spring bush holder 30 by means of stamp 32. Stamp 32 is a substantially a tube-shaped element that can receive and engage ball 27 with one open outer end. Stamp 32 is fastened in spring bush holder 30 by means of a shaft as 34 conducted through the openings 34 on both sides of the spring bush holder 30 and also through both oblong openings 36 provided on both sides of the stamp 32. The outer ends of shaft 34 are configured as guide pins 22 in mounted position. The oblong openings 36 of stamp 32 have a width that is just greater than the diameter 34 of the shaft, with respect to the circumferential direction of the stamp 32, Further the openings have a height in axial direction of the shaft making it possible to press together the spring, in this example the cupped spring washers 31. Stamp 32 is further provided with a recess 37 for receiving the neck 26 of tow hook 25. After the second ball clamp member 20 with stamp 32 is mounted around the ball the spring bush holder 30 will be displaced slowly into the direction of the ball 27 by tilting the coupling housing 11 downwards. Because of the special shape of the curve portion of the guide slits the generation of the clamping force by tightening the spring requires relatively little muscle power. By the displacement of spring bush holder 30 in the direction of the ball the cupped spring washers 31 are pressed together, generating a spring force and as a result also a clamping force on the ball 27, such that the ball is clampingly engaged. Shaft 34 displaces the oblong opening 36 in the longitudinal direction thereof with increased pressing together of the cupped spring washers 31.

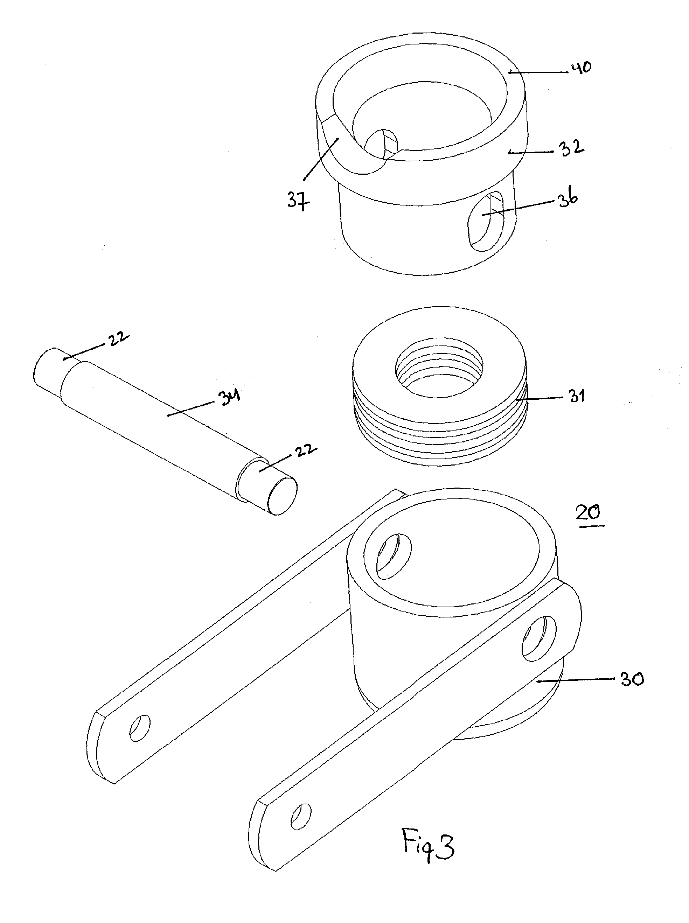

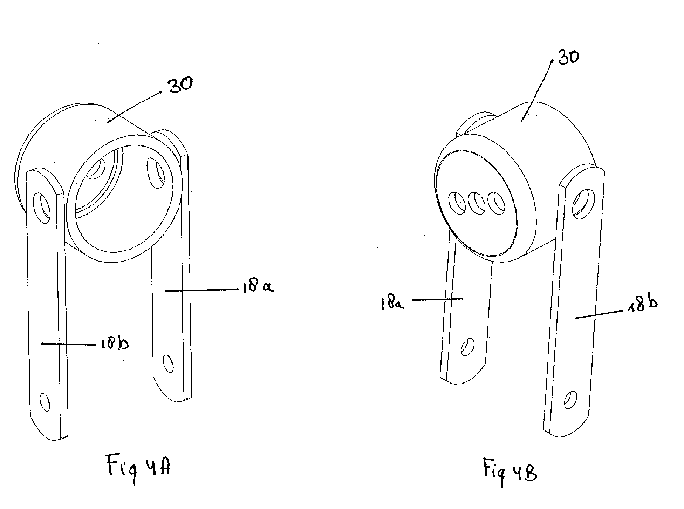

In Fig.4A en 4B spring bush holder 30 is shown in detail with two lever rods 18a, 18b welded thereupon and openings 34 are shown in the lever rods as well in the spring bush holder for conducting trough shaft 34.

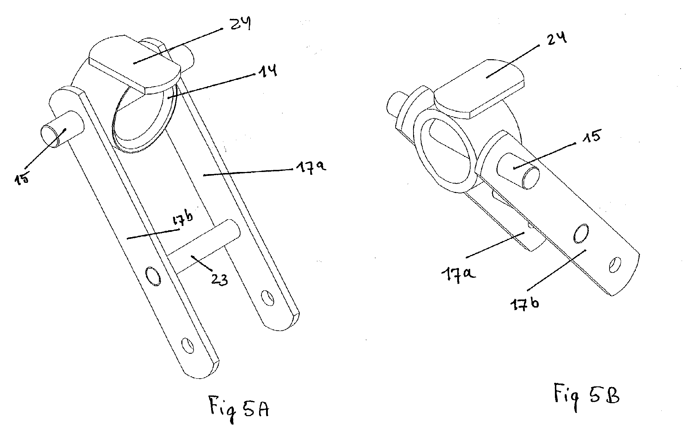

In Fig.5A en 5B is shown in detail first ball clamp member 14 with stop sheet 24, second lever rods 17a and 17b welded upon the ball clamp member, fixedly welded pivot shaft 15 and abutting member 23.

In Fig. 6 is shown in detail side portion 12. In this embodiment both side portions 12 are advantageously shaped of as two identical parts, resulting in a reduction of production costs.
In Fig.6 is further shown guide slit 22 en pivot opening 16 for pivot shaft 14 of first ball clamp member 14, openings 38 for connection with the support frame 2, and opening 39 for receiving transverse connection element 13. The upper curve portion of the guide slit 22 is consisting of a circle segment with a constant radius R with respect to the pivoting point 16 located in the centre of the circle.

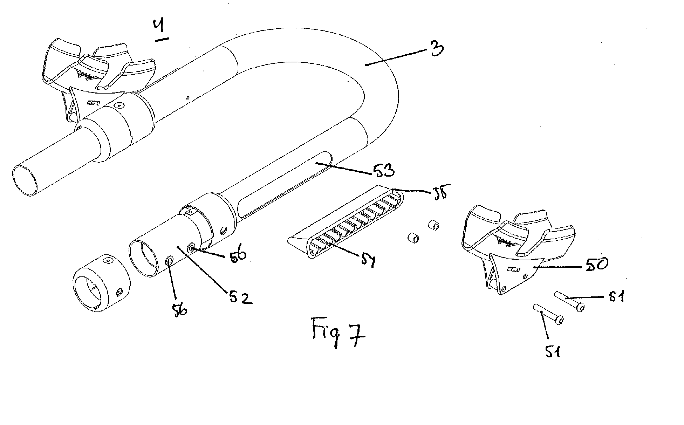

In Fig.7 is shown in exploded view in detail load holder like cycle wheel holder 4 with support tube 3, load receiver like wheel channel 50, locking pins 51 and tube-shaped element 52. Locking pins 51 are fixedly connected with cycle wheel holder 4 whereby in mounted position pins 51 are extending outside the wheel channel 50. Around support tube 3 is provided a tube-shaped element 52 enclosing the circumference of the support tube and being freely displaceable there over. In support tube 3 is provided a small slit 53 with limited length, further provided with snap elements. These snap elements may consists of mutually distantly spaced recesses provided in the circumferential edge of slit 53 in the wall of the support
In an alternative embodiment as shown in Fig.7 the snap elements 54 are releasable located in a separate snap organ 55, that may be mounted into the slit 53 of the support tube 3. The locking pins 51 are fixedly connected into openings 56 of the tube-shaped element 52 and are extending through the wall of tube-shaped element 52. As a result the locking pins 51 may be snapped into one or more snap elements 54, by pivoting the tube-shaped element over the circumference of the support tube 3 together with the therewith connected wheel channel 50. For adjustment of the wheel channel in order to be able to receive a cycle of a different size the cycle wheel holder must be released by tilted backwards, so that that the locking pins will snap out of the snap elements 54. Then the tube-shaped element 52 may be displaced in longitudinal direction of the support tube 3, after which by tilting forward of the cycle wheel holder the locking pins 51 may again be snapped in the snap 54.

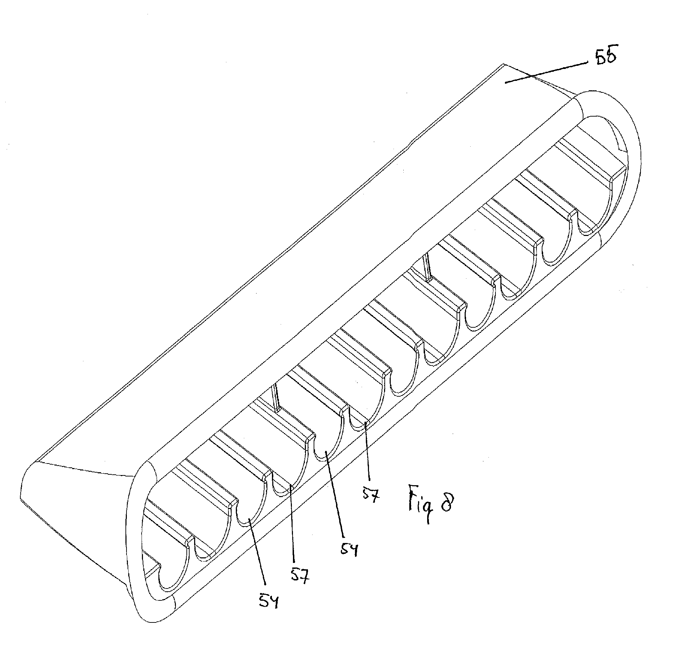

In a preferred embodiment the snap elements 54 are specially shaped. In Fig.8 is shown in detail snap member 55. Snap elements 54 are configured in snap member 55. Between the snap elements are configured receiving elements 57. The locking elements 51 experience no snap force in these receiving elements. When the cycle wheel holder 4 is tilted forwards to snap the locking pins 50 into the snap elements, only one locking pin will be snapped into an snap element while the other locking pin, 51 will be positioned in receiving element 57 and as a result experience no snap in force. This is an advantageous configuration because simultaneously snapping in of two locking pins will result in very high snap forces by small variations in the dimensions. When only one of the locking pins is snapping these problems will not occur.

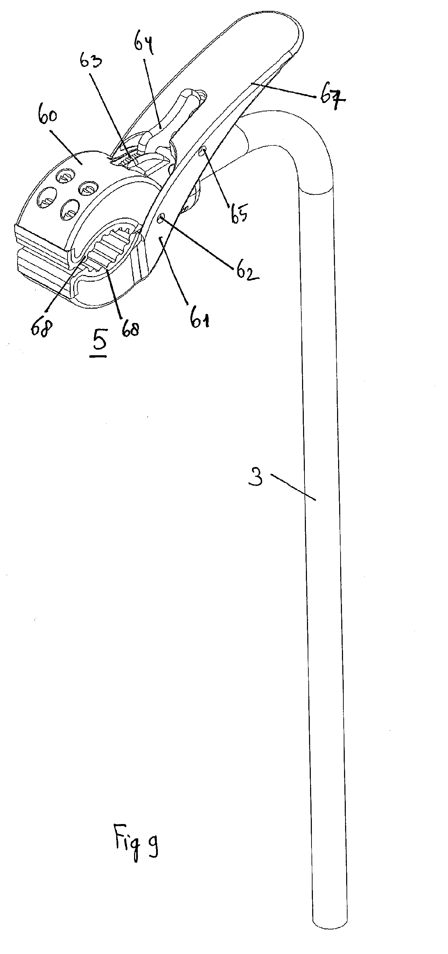

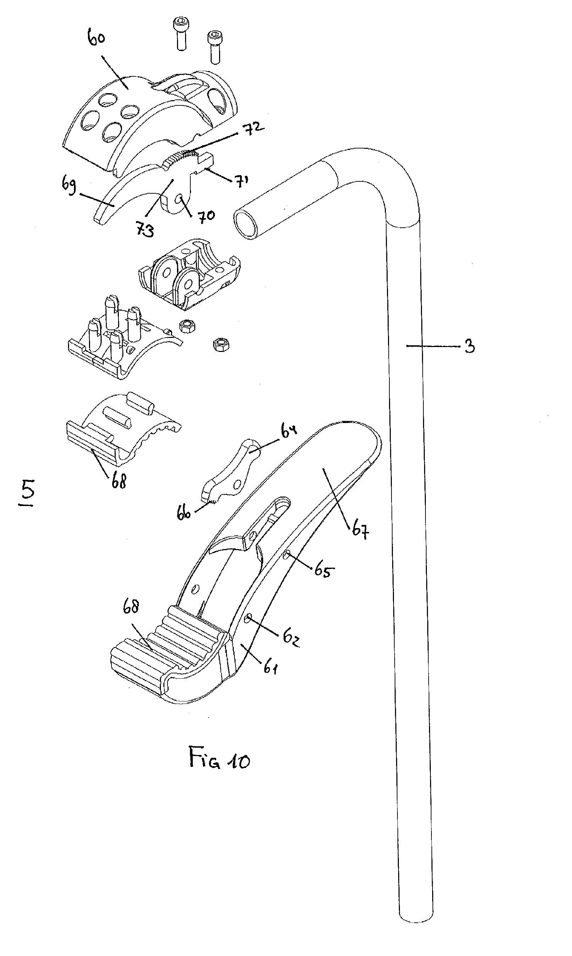

In Fig.9 is shown in detail a load clamp like a cycle frame clamp 5 mounted on a support element 3. This cycle frame clamp allows fastly clamping and releasing the frame tube of a load like a cycle. The fast lockable and releasable load clamp 5 comprises the following parts: a first plier-shaped clamp arm 60 mounted onto a support tube 3 and a second clamp arm 61 with hand tensioning grip 67 both hingingly mounted over shaft 62. Hand tensioning grip 67 is provided with a recess where first clamp arm 60 is conducted through and where an arc-shaped toothing 63 is visible provided on top of first clamp arm 60. Hinging ratchet element 64 is attached in hand tensioning grip 67 of second clamp arm 61 by means of a shaft 65. As a result of pressing together the hand tensioning grip 67 and the first clamp arm 60 mounted upon the support tube 3 the ratchet element64 with toothing 66 will rattle over the arc-shaped toothing 63 and will the load clamp 5 achieve the clamp position, so that as a result the cycle frame tube is fixedly clamped between the clamp claws 68 of both clamp arms. The load clamp 5 may be easily released by pressing the hinging ratchet element. As a result the connection with the arc-shaped toothing 63 is released and the load clamp 5 is released from its clamping position into its opened position, so that the cycle frame tube unlocks from the load clamp 5 and the load clamp achieves its opened position. When desired a spring element is added to the ratchet element 5 for positioning the toothing of the ratchet element 64 always in the direction of the arc-shaped toothing 63. In an alternative embodiment, as shown in exploded view in Fig.10 first clamp arm 60 comprises: a releasable element 73, a hand tensioning element 69, an opening 70 for hingeably mounting upon shaft 62 (not shown), an abutting surface 71 which leans upon support tube 3, and an arc-shaped surface with toothing 72. The ratchet element 64 is attached in hand tensioning grip 67 by means of shaft 65 (not shown) of second clamp arm 61.
When by pressing together of the hand tensioning grip 67 and the tube support tube with attached clamp arm 60 the ratchet element 64 rattles with his teeth 66 over the arc-shaped toothing 63 to reach the clamping position of the load clamp 5 so that the cycle frame tube is fixedly clamped between the clamp claws 68 on both clamp arms 60, 61. The releasable element 73 transfers the tension force from the support tube 3 support tube 3 through claw grips 68 to the cycle frame tube. By constructing the releasable element 73 from metal a hard wearing ratchet element may be shaped which in combination with clamp arms constructed from plastic a frame clamp is obtained which can be economically produced.

## Claims

1. Load carrier (1), e.g. for a cycle rack, provided with a coupling device (10) for releasably coupling onto a towing hook (25) with neck (26) and ball (27) of a vehicle, the load carrier (1) comprising a horizontal support tube (3) longitudinally provided with a small slot (53) of limited length provided with snap elements and whereby the load carrier (1) is further provided with an adjustable load holder (4), like a cycle wheel holder, pivotable and displaceable over a limited distance over the circumference surface of the support tube (3), whereby the load holder (4) consists of a load receiver (50), like a wheel channel, and of a tubular element (52) that freely displaceably encloses the circumference of the support tube at the location of the slot (53), whereby the load receiver (50) is herein connected with the tubular element (52) by means of the locking pins (51), which are extending in such a way through the wall of the tubular element (52) into the support tube (3) that the locking pins (51) may be snapped in or out of one or more of the snapping elements arranged in the slot by means of rotation -or in other words by tilting forwards and backwards- of the load holder (4) over the tube circumference of the support tube (3) for locking or releasing respectively.

2. Load carrier (1) according to claim 1, **characterized in that** a number of snap elements consists of recesses arranged in the wall of the support tube at mutual distant spaces in the circumferential edge of the slit (53).

3. Load carrier (1) according to claim 1, **characterized in that** the snap elements (54) are releasably located in a separate snap member (35) which may be mounted into the slit (53) of the support tube (3).

4. Load carrier (1) according to claim 3, **characterized in that** the snap member (35) also is provided with receiving elements (57) wherein the locking pins do not experience snap-in forces during pivoting and displacing of the load holder (4).

5. Load carrier according to claim 3, **characterized in that** the snap elements (54) and receiving elements (57) alternate within the snap member (35).

6. Load carrier (1), e.g. for a cycle rack, provided with a coupling device (10) for releasably coupling onto a towing hook (25) with neck (26) and ball (27) of a vehicle, provided with a fast lockable and releasable load clamp (5) which is positioned on a support element (3), for clamping a cycle frame tube, the load clamp (5) comprising:
a. a first plier-shaped clamp arm (60) which is fixedly connected onto a support member (3) comprising a clamp claw (68) and
b. a second clamp arm (61) with hand tensioning grip (67) mounted hingingly and movably onto an axis (62) comprising a clamp claw (68),
c. a recess in the hand tensioning grip (67) as a result of which a on the first clamp arm (60) positioned arc-shaped toothing element (63) is being engagable;
d. a hinging ratchet element (64) in the second hand tensioning grip (67) provided with toothing (66), which engages and cooperates with the arc-shaped toothing (63) of the first camp arm (60),
such that by hand pressing of the load clamp (5) the ratchet element (64) rattles with his teeth (66) over the arc-shaped toothing (63) to reach the clamping position of the load clamp (5) so that the cycle frame tube is fixedly clamped between the clamp claws on both clamp arms (60, 61) and such that by pressing the hinging ratchet element (64) the connection with the arc-shaped toothing (63) is released and the load clamp (5) is released from its clamping position into its opened position, so that the cycle frame tube unlocks from the load clamp (5).

7. Load carrier according to claim 6, **characterized in that** the arc-shaped toothing element is configured in a releasable element (73) in the first clamp arm (60) whereby the element (73) further comprises: a tensioning grip element (69), an opening (70) for hingingly attaching onto the clamp pivot axis (62), an abutting surface (71), and an arc-shaped surface (72) with toothing, such that in clamping position the arc-shaped toothing (72) transmits the clamping force.

8. Load carrier (1), e.g. for a cycle rack, provided with a coupling device (10) for releasably coupling onto a towing hook (25) with neck (26) and ball (27) of a vehicle the coupling device (10) comprising the following construction parts:
a. a coupling housing (11) on the one hand connectable to the load carrier (1) and on the other hand connectable to the towing hook (25), the coupling housing (11) comprising two parallel, preferably sheet-shaped side portions or side walls (12) mutually distantly spaced interconnected, which side portions (12) are provided with a guide slit (22) for guiding a divided ball clamp,
b. a first ball clamp member (14) pivotably connected in the coupling housing (11) between the side portions (12), and provided with a therewith fixedly connected first lever (17a, 17b) of a lever assembly (17, 18);
c. a second ball clamp member (20) pivotably and guidable arranged in the coupling housing (11) between the side portions (12) by means of on both sides arranged guide means (21) that are guided in the guide slits (22) and whereby the second ball clamp member (20) is provided with a fixedly connected second lever (18a, 18b) of said lever assembly (17, 18),
d. a lever assembly (17, 18) comprising at least the two aforesaid levers (17a, 17b, 18a, 18b), which are pivotably interconnected,
such that the coupling housing (11) is coupled with the towing hook (25) by successively tilting the coupling housing (11) over the ball (27) and therefore moving the guide means (21) of the second ball clamp member (20) through the guide slit (22) from a first still opened position of the coupling device (10), into the second final end position of the coupling device (10), whereby both ball clamp members (14, 20) are clampingly engaging the ball (27) of the towing hook (25) on both sides.

9. Load carrier (1) according to claim 8, **characterized in that** the second ball clamp member (20) comprises a stamp (32) which is displaceble in a holder (30) against a spring force.

10. Load carrier (1) according to any of the preceding claims, **characterized in that** the load carrier is tiltable such that by tilting the coupling housing (11) the coupling device (10) reaches a third tilting position, whereby the ball clamp members (14, 20) are clampingly engaging the ball (27) of the towing hook (25) on both sides thus making a temporary downward position of the load carrier (1) possible, in particular for opening the backdoor of the vehicle free of the load carrier (1).

11. Load carrier according to claim 10, **characterized in that** the guide slits (22) in the side portions (12) of the coupling housing (11) are configured from at least two different mutually converting curve portions (22', 22"), whereby a first curve portion (22') is configured to move the second ball clamp member (20) between the first (open) and the second (locked) position of the coupling device (10) and that the consecutive second curve portion (22") is such configured to move the coupling device (11) and the load carrier (1) from the second (locked) position into the temporary third position.

12. Load carrier (1) according to claim 11, **characterized in that** the first curve portion (22') is configured such that starting from the first position of the coupling device (10) firstly the second ball clamp member (20) is displaced to the ball (27) over a great distance per tilting angle of the coupling housing (11), while near the second position of the coupling device (10) the second ball clamp member (20) is moved to the ball (27) over a small distance per tilting angle of the coupling housing (11).

13. Load carrier (1) according to claim 12, **characterized in that** the second curve portion (22') is a circle segment with a constant radius (R) with respect to the pivoting point (16) positioned in the centre of the circle.

14. Load carrier (1) according to any of the preceding claims, **characterized in that** the first lever (17) is configured as two substantially parallelly extending straight rods (17a, 17b) with their first outer ends being fixedly connected to both sides of the first ball clamp member (14) and with the other outer ends being provided with a short straight portion angular turned over, whereby both straight rods on their second outer end are mutually interconnected by means of an abutting member (23) at the point of intersection of the short turned over portion and the long portion.

15. Load carrier (1) according to any of the preceding claims **characterized in that** the coupling device (10) is provided with a locking member (28) engaging the second ball clamp member (20) and locking the coupling device (10) into the second closed position.

16. Load carrier (1) according to claim 15, **characterized in that** the locking member (28) consists of a long pin, which is conducted through the transverse connection element (13) and exerts spring force in the direction of the second ball clamp member (28) by means of a mounted spring element.
